# EUROPEAN PATENT APPLICATION

(11) **EP 4 794 389 A1**
(43) Date of publication of application: **19.08.2026**
(21) Application number: 24879137.8
(22) Date of filing: 18.10.2024
(51) Int. Cl.: H04W 36/00

(54) **COMPUTING POWER PROCESSING METHOD AND APPARATUS, RELATED DEVICE, AND STORAGE MEDIUM**

(30) Priority: 18.10.2023 CN 202311355216
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: SUN, Qi, Beijing 100053 (CN); LI, Ting, Beijing 100053 (CN); ZHANG, Xiaohua, Beijing 100053 (CN)
(74) Representative: Novagraaf Technologies
(86) International application number: PCT/CN2024/125834
(87) International publication number: WO 2025/082497

(57) **Abstract**

The present application discloses a computing power processing method and apparatus, a first network element, a second network element, and a storage medium. The method comprises: receiving a first parameter sent by a second network element, wherein the first parameter represents first information of a first computing power corresponding to a first base station, and/or second information of a second computing power corresponding to at least one first node and/or a second base station adjacent to the first base station.

## Description

### CROSS-REFERENCE TO RELATED APPLICATION

This application is filed based on and claims priority to the Chinese Patent Application No. 202311355216.5 filed on October 18, 2023. The entire content of that Chinese Patent Application is incorporated herein by reference.

### TECHNICAL FIELD

The present disclosure relates to the field of communications, and in particular, to a computing processing method, apparatus, related device, and storage medium.

### BACKGROUND

A neighbor cell list defined in existing standards only contains relevant identifiers of cells, and can only perceive coverage-based neighbor cell conditions. However, in existing solutions, cells cannot perceive information such as computing resource occupancy of surrounding physical nodes that reflect computing capabilities. When a current cell or a target cell in a handover scenario may suffer from insufficient computing resources, in existing solutions, a cell cannot perceive computing resources, which is unfavorable for elastic computing resource sharing.

### SUMMARY

An objective of this disclosure is to equip a wireless device with an automatic guidance functionality to guide a user to a final destination via routes designed by local experts.

To address related technical problems, embodiments of the present disclosure provide a computing processing method, apparatus, related device, and storage medium.

The technical solutions of the embodiments of the present disclosure are implemented as follows:
An embodiment of the present disclosure provides a computing processing method applied to a first network element, including:
receiving a first parameter sent by a second network element; the first parameter characterizes first information related to first computing of a first base station and/or second information related to second computing of at least one first node and/or second base station neighboring and/or in proximity of the first base station.

In the above solution, the first parameter includes at least one of the following:
a first identifier, configured to identify the first information related to the first computing and the second information related to the second computing;
a second identifier, configured to identify the first base station and/or the first node and/or the second base station;
computing type-related information, configured to indicate a computing resource type and/or supported computing task type of the first base station and/or the first node and/or the second base station;
location-related information, configured to indicate geographic location of the first base station and/or the first node and/or the second base station;
computing resource-related information, configured to indicate a total capacity and/or available capacity of the computing resource type of the first base station and/or the first node and/or the second base station.

In the above solution, the method further includes:
determining a target node and/or target base station based on the first parameter; the target node and/or target base station is configured to receive service migration and/or user handover from the first base station.

In the above solution, the determining a target node and/or target base station based on the first parameter includes:
obtaining a computing requirement of a target service and/or user;
when the first computing cannot meet the computing requirement, determining a target node and/or target base station from the at least one first node and/or second base station according to the computing requirement and second information related to the second computing; the target node and/or target base station is configured to receive service migration and/or user handover from the first base station.

In the above solution, before determining the target node and/or target base station, the method further includes:
sending third information to the at least one first node and/or second base station, where the third information is configured to indicate a service status and/or computing resource occupancy of the first node and/or second base station.

In the above solution, the first parameter includes a parameter requested to be updated from the second base station; the method further includes:
sending request information for updating computing-related parameter(s) to the second base station according to the first parameter, and obtaining a feedback result from the second base station;
updating the first parameter based on the feedback result, to obtain an updated first parameter; wherein the updated first parameter is configured to update a computing table in the first parameter.

In the above solution, the first identifier includes at least one of the following:
a cluster identifier associated with the first information related to the first computing and the second information related to the second computing; or
an intra-cluster node identifier associated with the first information related to the first computing and the second information related to the second computing.

In the above solution, the method further includes:
receiving update information of the first parameter sent by the second network element; and
updating the computing table in the first parameter based on the update information, to obtain an updated computing table.

In the above solution, the computing type-related information includes at least one of the following:
computing resource type identifiers, wherein the computing resource type identifiers include at least identifiers corresponding to Central Processing Unit (CPU), Graphics Processing Unit (GPU), and Field-Programmable Gate Array (FPGA);
computing task type identifiers, wherein the computing task type identifiers include at least identifiers corresponding to Artificial Intelligence (AI), Centralized Unit (CU), Distributed Unit (DU), Fast Fourier Transformation (FFT), Inverse Fast Fourier Transform (IFFT), Delayed-First-Transmission (DFT), Low Density Parity Check Code (LDPC), Polar Codes (POLAR), and Packet Data Convergence Protocol (PDCP).

In the above solution, the first network element includes one of the following:
a base station; or
a Near-Realtime RAN Intelligent Controller (Near-RT RIC).

An embodiment of the present disclosure further provides a computing processing method applied to a second network element, including:
sending a first parameter to a first network element, wherein the first parameter characterizes first information related to first computing of a first base station and/or second information related to second computing of at least one first node and/or second base station neighboring and/or in proximity of the first base station.

In the above solution, the first parameter includes at least one of the following:
a first identifier, configured to identify the first information related to the first computing and the second information related to the second computing;
a second identifier, configured to identify the first base station and/or the first node and/or the second base station;
computing type-related information, configured to indicate a computing resource type and/or supported computing task type of the first base station and/or the first node and/or the second base station;
location-related information, configured to indicate a geographic location of the first base station and/or the first node and/or the second base station;
computing resource-related information, configured to indicate a total capacity and/or available capacity of the computing resource type of the first base station and/or the first node and/or the second base station.

In the above solution, the method further includes:
determining a correspondence between the first identifier and the second identifier based on the first parameter;
determining a node with a highest priority from the at least one second node according to the correspondence and/or the computing resource-related information;
updating an identifier of the node with the highest priority from the at least one second node in a computing table in the first parameter.

In the above solution, the first identifier includes at least one of the following:
a cluster identifier associated with the first information related to the first computing and the second information related to the second computing; or
an intra-cluster node identifier associated with the first information related to the first computing and the second information related to the second computing.

In the above solution, the method further includes:
sending update information of the first parameter to the first network element; the update information is used by the second network element to update the computing table in the first parameter to obtain an updated computing table.

In the above solution, the computing type-related information includes at least one of the following:
computing resource type identifiers, wherein the computing resource type identifiers include at least identifiers corresponding to CPU, GPU, and FPGA;
computing task type identifiers, wherein the computing task type identifiers include at least identifiers corresponding to AI, CU, DU, FFT, IFFT, DFT, LDPC, POLAR, and PDCP.

In the above solution, the second network element includes one of the following:
a network management system;
a Service Management & Orchestration (SMO);
a Non-Realtime RAN Intelligent Controller (Non-RT RIC);
a Network Function Orchestration (NFO); or
a Federated O-Cloud Orchestration & Management (FOCOM).

An embodiment of the present disclosure further provides a computing apparatus disposed in a first network element, including:
a receiving unit, configured to receive a first parameter sent by a second network element, wherein the first parameter characterizes first information related to first computing of a first base station and/or second information related to second computing of at least one first node and/or second base station neighboring and/or in proximity of the first base station.

An embodiment of the present disclosure further provides a computing apparatus disposed in a second network element, including:
a sending unit, configured to send a first parameter to a first network element, wherein the first parameter characterizes first information related to first computing of a first base station and/or second information related to second computing of at least one first node and/or second base station neighboring and/or in proximity of the first base station.

An embodiment of the present disclosure further provides a first network element, including: a first communication interface and a first processor; wherein,
the first communication interface is configured to receive a first parameter sent by a second network element; the first parameter characterizes first information related to first computing of a first base station and/or second information related to second computing of at least one first node and/or second base station neighboring and/or in proximity of the first base station.

An embodiment of the present disclosure further provides a second network element, including: a second communication interface and a second processor; wherein,
the second communication interface is configured to send a first parameter to a first network element, wherein the first parameter characterizes first information related to first computing of a first base station and/or second information related to second computing of at least one first node and/or second base station neighboring and/or in proximity of the first base station.

An embodiment of the present disclosure further provides a first network element, including: a first processor and a first memory storing a computer program operable on the processor,
wherein the first processor is configured to execute the steps of any of the above methods on the first network element side when running the computer program.

An embodiment of the present disclosure further provides a second network element, including: a second processor and a second memory storing a computer program operable on the processor,
wherein the second processor is configured to execute the steps of any of the above methods on the second network element side when running the computer program.

An embodiment of the present disclosure further provides a storage medium having a computer program stored thereon, wherein the computer program, when executed by a processor, implements the steps of any of the above methods on the first network element side, or implements the steps of any of the above methods on the second network element side.

In the computing processing method, apparatus, related device, and storage medium provided by the embodiments of the present disclosure, a first network element receives a first parameter sent by a second network element, wherein the first parameter characterizes first information related to first computing of a first base station and/or second information related to second computing of at least one first node and/or second base station neighboring and/or in proximity of the first base station. With the solution provided in the embodiments of the present disclosure, the first network element receives, from the second network element, the first parameter that characterizes the first information related to the first computing of the first base station and/or the second information related to the second computing of the at least one first node and/or second base station neighboring and/or in proximity of the first base station. This enables the first base station to efficiently select at least one adjacent first node and/or second base station based on service requirement(s) in scenarios such as insufficient computing resources, introduction of new functions/services, or handover, so as to meet service requirements in terms of service computing, delay, and the like, and ensure user service experience.

### BRIEF DESCRIPTION OF THE DRAWINGS

FIG. 1 is a schematic flowchart of a computing processing method according to an embodiment of the present disclosure.
FIG. 2 is a schematic flowchart of another computing processing method according to an embodiment of the present disclosure.
FIG. 3 is a schematic application diagram of the computing processing method of the present disclosure.
FIG. 4 is another schematic application diagram of the computing processing method of the present disclosure.
FIG. 5 is another schematic application diagram of the computing processing method of the present disclosure.
FIG. 6 is another schematic application diagram of the computing processing method of the present disclosure.
FIG. 7 is another schematic application diagram of the computing processing method of the present disclosure.
FIG. 8 is a schematic diagram of a computing processing apparatus according to an embodiment of the present disclosure.
FIG. 9 is a schematic diagram of another computing processing apparatus according to an embodiment of the present disclosure.
FIG. 10 is a structural diagram of a first network element according to an embodiment of the present disclosure.
FIG. 11 is a structural diagram of a second network element according to an embodiment of the present disclosure.
FIG. 12 is a schematic diagram of a computing processing system according to an embodiment of the present disclosure.

### DETAILED DESCRIPTION

The present disclosure is described in further detail below with reference to the accompanying drawings and embodiments.

In existing standards, an Automatic Neighbor Cell Relation function is defined in a self-organizing network, to dynamically provide and update a neighbor cell list for a source cell, facilitating the cell to perceive neighbor cell status and provide high-quality wireless services for users during User Equipment (UE) handover. The relationship between the Automatic Neighbor Relation function and Operation Administration and Maintenance (OAM) is as follows: OAM can update and maintain a neighbor cell list of a cell, or the cell can update the neighbor cell list on its own based on information related to neighbor cells with strong signals reported by UEs. At present, the neighbor cell list information maintained by a cell mainly consists of global and physical identifiers of a target cell, such as NR Cell Global Identifier (NR CGI)/NR Cell Physical Cell Identifier (NR PCI), Evolved Universal Mobile Telecommunications System Terrestrial Radio Access Network Cell Global Identifier (ECGI)/Physical Cell Identifier (PCI).

The neighbor cell list defined in the existing standards only contains relevant identifiers of cells and can only perceive coverage-based neighbor cell conditions. However, in existing solutions, a cell cannot perceive information such as computing resource occupancy of surrounding physical nodes that reflects computing capabilities. When the current cell or a target cell in a handover scenario may suffer from insufficient computing resources, the cell cannot perceive computing resources in existing solutions, which is unfavorable for elastic computing resource sharing. Especially in future wireless surplus computing sharing scenarios, a cell's perception of physical computing capabilities within a certain range helps share computing tasks and achieve flexible scaling of the cell, thereby efficiently utilizing regional computing resources, meeting service requirements, and ensuring user experience.

In addition, in the existing standards, the cell automatic relation neighbor cell list is standardized for performing dynamic update to perceive neighbor cell status, but the existing neighbor cell list only contains neighbor cell identifiers. In the existing solutions, a cell cannot perceive other information, especially nearby computing resource information that reflects computing capabilities.

Based on this, in various embodiments of the present disclosure, a first network element receives a first parameter sent by a second network element, where the first parameter characterizes first information related to first computing of a first base station and/or second information related to second computing of at least one first node and/or second base station neighboring and/or in proximity of the first base station. This enables the first base station to efficiently select at least one adjacent first node and/or second base station according to service requirements in scenarios such as insufficient computing resources, introduction of new functions/services, or handover, so as to meet service computing, delay and other requirements and ensure user service experience.

The solutions provided by the embodiments of the present disclosure offer a computing perception scheme, which can select appropriate shared computing according to service requirements, thereby meeting service computing, delay and other requirements and ensuring user service experience.

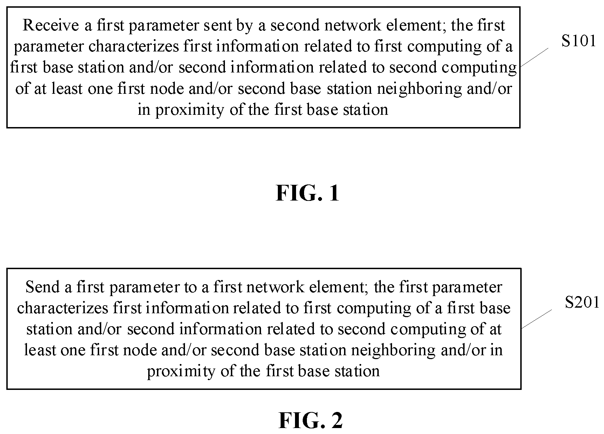

An embodiment of the present disclosure provides a computing processing method applied to a first network element, as shown in FIG. 1, which is a schematic flowchart of a computing processing method according to an embodiment of the present disclosure. The method includes the following operations.

In Step 101, a first parameter sent by a second network element is received. The first parameter characterizes first information related to first computing of a first base station and/or second information related to second computing of at least one first node and/or second base station neighboring and/or in proximity of the first base station.

In this embodiment, the specific application scenario of the computing processing method may be determined according to actual conditions and is not limited herein. As an example, the computing processing method may specifically be a computing perception method, which may be an inter-base-station computing perception method.

The first network element and the second network element may be determined according to actual conditions and are not limited herein. As an example, the first network element may include a base station, Near-RT RIC, etc.; the second network element may include a network management system, SMO, Non-RT RIC, NFO, FOCOM, etc. In practical applications, the base station may be denoted as gNB or Source gNB. As an example, the first network element may be Near-RT RIC, and the second network element may be SMO.

The first parameter may be determined according to actual conditions and is not limited herein. As an example, the first parameter may include a first identifier, a second identifier, computing type-related information, location-related information, computing resource-related information, etc. In practical applications, the first identifier may be denoted as Computing ID. The second identifier may include a cluster identifier, an intra-cluster node identifier (i.e., a server identifier), and an identifier for uniquely identifying a base station, which may include PLMN ID, etc. In practical applications, the cluster identifier may be denoted as Cluster id; the intra-cluster node identifier may be denoted as Node id; and the identifier for uniquely identifying a base station may be denoted as gNB ID. The computing type-related information may be understood as information describing a computing type and may include information related to a resource type and a task type, and may be denoted as Computing type. The computing resource type may be denoted as Resource type and may include CPU/GPU/FPGA, etc. The computing task type may be denoted as Task type and may include AI/CU/DU, FFT/IFFT/DFT/LDPC/POLAR/PDCP encryption/decryption operations, user access-related processing, etc. The location-related information may be denoted as Location. The computing resource-related information may be understood as capacity information describing a computing resource type and may include information related to total capacity and/or available capacity of the computing resource type.

That the first parameter characterizes first information related to first computing of a first base station and/or second information related to second computing of at least one first node and/or second base station neighboring and/or in proximity of the first base station may be understood as: Case 1, the first parameter characterizes first information related to first computing of the first base station; Case 2, the first parameter characterizes second information related to at least one first node neighboring and/or in proximity of the first base station; Case 3, the first parameter characterizes first information related to first computing of the first base station and second information related to at least one first node neighboring and/or in proximity of the first base station; Case 4, the first parameter characterizes first information related to first computing of the first base station and second information related to at least one second base station neighboring and/or in proximity of the first base station; Case 5, the first parameter characterizes second information related to second computing of at least one first node and second base station neighboring and/or in proximity of the first base station; Case 6, the first parameter characterizes first information related to first computing of the first base station and second information related to second computing of at least one first node and second base station neighboring and/or in proximity of the first base station. The first information related to computing of the base station may be understood as computing-related information corresponding to the first base station; the second information related to second computing of at least one first node and/or second base station neighboring and/or in proximity of the first base station may be understood as computing-related information corresponding to at least one first node and/or second base station neighboring and/or in proximity of the first base station. The first base station, the first node and the second base station may all be determined according to actual conditions and are not limited herein. As an example, the first base station may be denoted as gNB, gNBm, Source gNB, etc. The second base station may be denoted as gNBn, gNBm, etc. The first node may be denoted as Computing Node.

In practical applications, when the first network element is Near-RT RIC, the first base station may be gNBm and the second base station may be gNBn; when the first network element is Near-RT RIC, the first base station may be gNBm and the first node may be Computing Node.

When the first network element is gNB, the first base station may be gNBm and the second base station may be gNBn; when the first network element is Source gNB, the first base station may be gNBm and the second base station may be gNBn.

In an embodiment, the first parameter includes at least one of the following:
a first identifier; the first identifier is configured to identify the first information related to the first computing and the second information related to the second computing;
a second identifier; the second identifier is configured to identify the first base station and/or the first node and/or the second base station;
computing type-related information, which is configured to indicate the computing resource type and/or supported computing task type of the first base station and/or the first node and/or the second base station;
location-related information; the location-related information is configured to indicate a geographic location of the first base station and/or the first node and/or the second base station;
computing resource-related information; the computing resource-related information is configured to indicate a total capacity and/or available capacity of the computing resource type of the first base station and/or the first node and/or the second base station.

In this embodiment, both the first identifier and the second identifier may be determined according to actual conditions and are not limited herein. As an example, the first identifier may be understood as an identifier for uniquely identifying computing and may include a cluster identifier and a node identifier. In practical applications, the first identifier may be denoted as Computing ID. That the second identifier is configured to identify the first base station and/or the first node and/or the second base station may be understood as: the second identifier is configured to identify the first base station; or the second identifier is configured to identify the first node; or the second identifier is configured to identify the second base station; or the second identifier is configured to identify the first base station and the first node; or the second identifier is configured to identify the first base station and the second base station; or the second identifier is configured to identify the first base station, the first node and the second base station. The second identifier may include a cluster identifier, an intra-cluster node identifier (i.e., a server identifier), and an identifier for uniquely identifying a base station, which may include PLMN ID, etc. In practical applications, the cluster identifier may be denoted as Cluster id; the intra-cluster node identifier may be denoted as Node id; and the identifier for uniquely identifying a base station may be denoted as gNB ID.

The computing type-related information may also be determined according to actual conditions and is not limited herein. As an example, the computing type-related information may be understood as information describing a computing type and may include information related to a resource type and a task type. In practical applications, the computing type-related information may be denoted as Computing type. That the computing type-related information is configured to indicate the computing resource type and/or supported computing task type of the first base station and/or the first node and/or the second base station may be understood as: the computing type-related information is configured to indicate the computing resource type of the first base station; or the computing type-related information is configured to indicate the computing resource type of the first node; or the computing type-related information is configured to indicate the computing resource type of the second base station; or the computing type-related information is configured to indicate the supported computing task type of the first base station; or the computing type-related information is configured to indicate the supported computing task type of the first node; or the computing type-related information is configured to indicate the supported computing task type of the second base station; the computing type-related information is configured to indicate the computing resource type of the first base station and the computing resource type of the first node; or the computing type-related information is configured to indicate the supported computing task type of the first base station and the supported computing task type of the first node; or the computing type-related information is configured to indicate the computing resource type and supported computing task type of the first base station and the computing resource type and supported computing task type of the first node; or the computing type-related information is configured to indicate the computing resource type and supported computing task type of the first base station; or the computing type-related information is configured to indicate the computing resource type and supported computing task type of the first node, etc. In practical applications, the computing resource type may be denoted as Resource type and may include CPU/GPU/FPGA, etc. The computing task type may be denoted as Task type and may include AI/CU/DU, FFT/IFFT/DFT/LDPC/POLAR/PDCP encryption/decryption operations, user access-related processing, etc.

The location-related information may also be determined according to actual conditions and is not limited herein. As an example, the location-related information may be understood as information describing the geographic location of a computing node. In practical applications, the location-related information may be denoted as Location. That the location-related information is configured to indicate the geographic location of the first base station and/or the first node and/or the second base station may be understood as: the location-related information is configured to indicate the geographic location of the first base station; or the location-related information is configured to indicate the geographic location of the first node; or the location-related information is configured to indicate the geographic location of the second base station; or the location-related information is configured to indicate the geographic location of the first base station and the geographic location of the first node; or the location-related information is configured to indicate the geographic location of the first base station and the geographic location of the second base station; or the location-related information is configured to indicate the geographic location of the first node and the geographic location of the second base station; the location-related information is configured to indicate the geographic location of the first base station, the geographic location of the first node and the geographic location of the second base station, etc.

The computing resource-related information may also be determined according to actual conditions and is not limited herein. As an example, the computing resource-related information may be understood as capacity information describing a computing resource type and may include information related to total capacity and/or available capacity of the computing resource type. That the computing resource-related information is configured to indicate the total capacity and/or available capacity of the computing resource type of the first base station and/or the first node and/or the second base station may be understood as: the computing resource-related information is configured to indicate the total capacity and/or available capacity of the computing resource type of the first base station; or the computing resource-related information is configured to indicate the total capacity and/or available capacity of the first node; or the computing resource-related information is configured to indicate the total capacity and/or available capacity of the computing resource type of the second base station; or the computing resource-related information is configured to indicate the total capacity and/or available capacity of the computing resource type of the first base station and the total capacity and/or available capacity of the computing resource type of the first node; or the computing resource-related information is configured to indicate the total capacity and/or available capacity of the computing resource type of the first base station and the total capacity and/or available capacity of the computing resource type of the second base station; or the computing resource-related information is configured to indicate the total capacity and/or available capacity of the computing resource type of the first base station, the total capacity and/or available capacity of the computing resource type of the first node and the total capacity and/or available capacity of the computing resource type of the second base station, etc.

Based on this, in an embodiment, the method further includes:
determining a target node and/or target base station based on the first parameter; the target node and/or target base station is configured to receive service migration and/or user handover from the first base station.

In this embodiment, the manner of determining the target node and/or target base station based on the first parameter may be determined according to actual conditions and is not limited herein. As an example, determining the target node and/or target base station based on the first parameter may include obtaining computing requirement(s) of a target service and/or user, and determining the target node and/or target base station from the at least one first node and/or second base station according to the computing requirement(s) and the second information related to the second computing.

In this embodiment, the base station perceives shareable computing resource conditions of other neighbor nodes, facilitating the current base station to efficiently select neighbor computing nodes according to service requirements in scenarios such as insufficient computing resources, introduction of new functions/services, or handover, so as to meet service computing, delay and other requirements.

Based on this, in an embodiment, the determining the target node and/or target base station based on the first parameter includes:
obtaining computing requirement(s) of a target service and/or user;
when the first computing cannot meet the computing requirement(s), determining a target node and/or target base station from the at least one first node and/or second base station according to the computing requirement(s) and the second information related to the second computing; the target node and/or target base station is configured to receive service migration and/or user handover from the first base station.

In this embodiment, both the computing requirement(s) of the target service and the computing requirement(s) of the user may be determined according to actual conditions and are not limited herein. As an example, the target service may be a computing service; the computing requirement(s) of the user may be computing resources required by the user.

That the first computing cannot meet the computing requirements may be understood as insufficient computing resources of the first base station, in other words, computing resources of the current base station are insufficient.

The operation of determining the target node and/or target base station from the at least one first node and/or second base station according to the computing requirements and the second information related to the second computing may be understood as efficiently selecting neighbor computing node(s) according to service requirement(s) to meet service computing, delay and other requirements.

In this embodiment, computing capability indicators within a certain range are introduced and maintained inside a cell to indicate the computing capabilities of other nodes neighboring and/or in proximity of the current cell. By collecting computing resource occupancy, surplus computing resources and other information, the source cell can select a target cell and/or computing node based on neighbor cell coverage capability and computing capability during handover between gNBs, or select appropriate shared computing according to service requirements when the current cell has insufficient resources or needs additional computing resources for introducing new functions or services, thereby meeting service computing, delay and other requirements and ensuring user service experience.

Based on this, in an embodiment, before the determining the target node and/or target base station, the method further includes:
sending third information to the at least one first node and/or second base station, where the third information is configured to indicate the service status and/or computing resource occupancy of the first node and/or second base station.

In this embodiment, that the third information is configured to indicate the service status and/or computing resource occupancy of the first node and/or second base station may be understood as: the third information is configured to indicate the service status and/or computing resource occupancy of the first node; or the third information is configured to indicate the service status and/or computing resource occupancy of the second base station; or the third information is configured to indicate the service status and/or computing resource occupancy of the first node and the second base station. The third information may be understood as indication information; the content specifically indicated by the third information may be determined according to actual conditions and is not limited herein.

Based on this, in an embodiment, the first parameter includes a parameter requested to be updated from the second base station; the method further includes:
sending request information for updating computing-related parameter(s) to the second base station according to the first parameter, to obtain a feedback result from the second base station;
updating the first parameter based on the feedback result to obtain an updated first parameter; the updated first parameter is configured to update a computing table in the first parameter.

In this embodiment, the computing table in the first parameter may be understood as a computing table formed by various parameters; the specific content of the computing table may be determined according to actual conditions and is not limited herein. As an example, the computing table may include Computing ID, Cluster ID, Node ID, gNB ID, Computing type, Resource type, Task type, etc. In practical applications, the computing table may include a computing capability table and a computing relation table.

For ease of understanding, an example is given here where the first network element is a base station, and the computing processing method is an inter-base-station computing processing method, specifically an inter-base-station computing perception method. The near-cell computing capability can be updated and maintained through SMO. In the initialization phase, OAM/Non-RT RIC in the management and orchestration module configures a computing table near the base station, updates the computing table according to deployment of a new base station or computing node, and sends it to the base station or Near-RT RIC. Initialization is performed in the network planning phase, OAM configures a computing table near the current base station, or Non-RT RIC/rApp configures the computing table near the current base station for Near-RT RIC via the A1 interface, e.g., determining the cell computing table range and computing node selection priority according to the geographic location of nodes, the connection relationship between base stations in the backhaul link, or the relative delay between base stations. The base station/Near-RT RIC feeds back to OAM/Non-RT RIC whether the computing table configuration succeeds or fails. When FOCOM updates cloud infrastructure configuration and NFO deploys and initializes a new base station, the newly deployed base station registers with OAM and reports its computing capability, including computing-related identifiers, computing types, location and other information. After OAM successfully configures the new base station, OAM updates the newly deployed and running base station to the current base station's computing table. Similarly, when OAM detects that an adjacent base station is shut down, OAM deletes relevant information related to the shut-down base station from the table. When FOCOM updates cloud infrastructure configuration and deploys a new computing node or expands a new computing board on an existing gNB, the new computing node reports its computing capabilities to OAM via FOCOM, and OAM/Non-RT RIC updates the information related to the newly deployed computing node to the computing table of the current base station. Similarly, when FOCOM detects that a node is shut down, it updates OAM, and OAM deletes relevant information related to the shut-down base station from the table.

Based on this, in an embodiment, the first identifier includes at least one of the following:
a cluster identifier associated with the first information related to the first computing and the second information related to the second computing;
an intra-cluster node identifier associated with the first information related to the first computing and the second information related to the second computing.

The cluster identifier associated with the first information related to the first computing and the second information related to the second computing may be denoted as Cluster ID in practical applications.

The intra-cluster node identifier associated with the first information related to the first computing and the second information related to the second computing may be denoted as Node ID in practical applications.

Based on this, in an embodiment, the method further includes:
receiving update information of the first parameter sent by the second network element;
updating the computing table in the first parameter based on the update information, to obtain an updated computing table.

In this embodiment, the computing table in the first parameter may be understood as a computing table formed by various parameters; the specific content of the computing table may be determined according to actual conditions and is not limited herein. As an example, the computing table may include Computing ID, Cluster ID, Node ID, gNB ID, Computing type, Resource type, Task type, etc.

For ease of understanding, an example is given here where the first network element is Near-RT RIC, the second network element is Non-RT RIC, and the computing processing method is an inter-base-station computing processing method, specifically an inter-base-station computing perception method. Near-RT RIC can receive a computing table configured by Non-RT RIC and update the computing table according to changes in computing of base stations or computing nodes. Based on the initialized nearby computing table, Near-RT RIC obtains the base station identifiers and computing identifiers of target gNBs and computing nodes, and requests/subscribes to computing capabilities from corresponding base stations via an enhanced E2 interface or from computing nodes via a newly added interface. After receiving the computing capability request from Near-RT RIC, the target gNB and computing node monitor updates to their own computing capabilities. When expansion of computing resource types or computing capabilities in the gNB or computing node is detected, the computing capabilities including computing type, location information and the like are reported periodically or event-triggered via the enhanced E2 or newly added interface. After receiving the updated computing capabilities reported by the gNB and computing node, Near-RT RIC updates the computing table accordingly.

Based on this, in an embodiment, the computing type-related information includes at least one of the following:
computing resource type identifiers; the computing resource type identifiers include at least identifiers corresponding to CPU, GPU and FPGA;
computing task type identifiers; the computing task type identifiers include at least identifiers corresponding to AI, CU, DU, FFT, IFFT, DFT, LDPC, POLAR and PDCP.

In this embodiment, both the computing resource type identifier and the computing task type identifier may be determined according to actual conditions and are not limited herein. The computing resource type identifier may be denoted as Resource type and may include identifiers corresponding to CPU, GPU, FPGA, etc. The computing task type identifier may be denoted as Task type and may include identifiers corresponding to AI, CU, DU, FFT, IFFT/DFT/LDPC/POLAR/PDCP encryption/decryption operations, user access-related processing, etc.

Based on this, in an embodiment, the first network element includes one of the following:
a base station;
Near-RT RIC.

In the embodiment of the present disclosure, the first network element receives the first parameter sent by the second network element; the first parameter characterizes first information related to first computing of a first base station and/or second information related to second computing of at least one first node and/or second base station neighboring and/or in proximity of the first base station. With the solution provided by the embodiment of the present disclosure, the first base station can efficiently select at least one neighbor first node and/or second base station according to service requirement(s) in scenarios such as insufficient computing resources, introduction of new functions/services, or handover, so as to meet service computing, delay and other requirements and ensure user service experience.

Correspondingly, an embodiment of the present disclosure further provides a computing processing method applied to a second network element, as shown in FIG. 2, which is a schematic flowchart of another computing processing method according to an embodiment of the present disclosure. The method includes the above operations.

In Step 201, a first parameter is sent to a first network element; the first parameter characterizes first information related to first computing of a first base station and/or second information related to second computing of at least one first node and/or second base station neighboring and/or in proximity of the first base station.

In this embodiment, the specific application scenario of the computing processing method may be determined according to actual conditions and is not limited herein. As an example, the computing processing method may specifically be a computing perception method, which may be an inter-base-station computing perception method.

The first network element and the second network element may be determined according to actual conditions and are not limited herein. As an example, the first network element may include a base station, Near-RT RIC, etc.; the second network element may include a network management system, SMO, Non-RT RIC, NFO, FOCOM, etc. In practical applications, the base station may be denoted as gNB or Source gNB. As an example, the first network element may be Near-RT RIC, and the second network element may be SMO.

The first parameter may be determined according to actual conditions and is not limited herein. As an example, the first parameter may include a first identifier, a second identifier, computing type-related information, location-related information, computing resource-related information, etc. In practical applications, the first identifier may be denoted as Computing ID. The second identifier may include a cluster identifier, an intra-cluster node identifier (i.e., a server identifier), and an identifier for uniquely identifying a base station, which may include PLMN ID, etc. In practical applications, the cluster identifier may be denoted as Cluster id; the intra-cluster node identifier may be denoted as Node id; and the identifier for uniquely identifying a base station may be denoted as gNB ID. The computing type-related information may be understood as information describing a computing type and may include information related to a resource type and a task type, and may be denoted as Computing type. The computing resource type may be denoted as Resource type and may include CPU/GPU/FPGA, etc. The computing task type may be denoted as Task type and may include AI/CU/DU, FFT/IFFT/DFT/LDPC/POLAR/PDCP encryption/decryption operations, user access-related processing, etc. The location-related information may be denoted as Location. The computing resource-related information may be understood as capacity information describing a computing resource type and may include information related to total capacity and/or available capacity of the computing resource type.

That the first parameter characterizes first information related to first computing of a first base station and/or second information related to second computing of at least one first node and/or second base station neighboring and/or in proximity of the first base station may be understood as: Case 1, the first parameter characterizes first information related to first computing of the first base station; Case 2, the first parameter characterizes second information related to at least one first node neighboring and/or in proximity of the first base station; Case 3, the first parameter characterizes first information related to first computing of the first base station and second information related to at least one first node neighboring and/or in proximity of the first base station; Case 4, the first parameter characterizes first information related to first computing of the first base station and second information related to at least one second base station neighboring and/or in proximity of the first base station; Case 5, the first parameter characterizes second information related to second computing of at least one first node and second base station neighboring and/or in proximity of the first base station; Case 6, the first parameter characterizes first information related to first computing of the first base station and second information related to second computing of at least one first node and second base station neighboring and/or in proximity of the first base station. The first information related to computing of the base station may be understood as computing-related information corresponding to the first base station; the second information related to second computing of at least one first node and/or second base station neighboring and/or in proximity of the first base station may be understood as computing-related information corresponding to at least one first node and/or second base station neighboring and/or in proximity of the first base station. The first base station, the first node and the second base station may all be determined according to actual conditions and are not limited herein. As an example, the first base station may be denoted as gNB, gNBm, Source gNB, etc. The second base station may be denoted as gNBn, gNBm, etc. The first node may be denoted as Computing Node.

In practical applications, when the first network element is Near-RT RIC, the first base station may be gNBm and the second base station may be gNBn; when the first network element is Near-RT RIC, the first base station may be gNBm and the first node may be Computing Node.

When the first network element is gNB, the first base station may be gNBm and the second base station may be gNBn; when the first network element is Source gNB, the first base station may be gNBm and the second base station may be gNBn.

In an embodiment, the first parameter includes at least one of the following:
a first identifier, configured to identify the first information related to the first computing and the second information related to the second computing;
a second identifier, configured to identify the first base station and/or the first node and/or the second base station;
computing type-related information, configured to indicate the computing resource type and/or supported computing task type of the first base station and/or the first node and/or the second base station;
location-related information, configured to indicate the geographic location of the first base station and/or the first node and/or the second base station;
computing resource-related information, configured to indicate the total capacity and/or available capacity of the computing resource type of the first base station and/or the first node and/or the second base station.

In this embodiment, both the first identifier and the second identifier may be determined according to actual conditions and are not limited herein. As an example, the first identifier may be understood as an identifier for uniquely identifying computing and may include a cluster identifier and a node identifier. In practical applications, the first identifier may be denoted as Computing ID. That the second identifier is configured to identify the first base station and/or the first node and/or the second base station may be understood as: the second identifier is configured to identify the first base station; or the second identifier is configured to identify the first node; or the second identifier is configured to identify the second base station; or the second identifier is configured to identify the first base station and the first node; or the second identifier is configured to identify the first base station and the second base station; or the second identifier is configured to identify the first base station, the first node and the second base station. The second identifier may include a cluster identifier, an intra-cluster node identifier (i.e., a server identifier), and an identifier for uniquely identifying a base station, which may include PLMN ID, etc. In practical applications, the cluster identifier may be denoted as Cluster id; the intra-cluster node identifier may be denoted as Node id; and the identifier for uniquely identifying a base station may be denoted as gNB ID.

The computing type-related information may also be determined according to actual conditions and is not limited herein. As an example, the computing type-related information may be understood as information describing a computing type and may include information related to a resource type and a task type. In practical applications, the computing type-related information may be denoted as Computing type. That the computing type-related information is configured to indicate the computing resource type and/or supported computing task type of the first base station and/or the first node and/or the second base station may be understood as: the computing type-related information is configured to indicate the computing resource type of the first base station; or the computing type-related information is configured to indicate the computing resource type of the first node; or the computing type-related information is configured to indicate the computing resource type of the second base station; or the computing type-related information is configured to indicate the supported computing task type of the first base station; or the computing type-related information is configured to indicate the supported computing task type of the first node; or the computing type-related information is configured to indicate the supported computing task type of the second base station; the computing type-related information is configured to indicate the computing resource type of the first base station and the computing resource type of the first node; or the computing type-related information is configured to indicate the supported computing task type of the first base station and the supported computing task type of the first node; or the computing type-related information is configured to indicate the computing resource type and supported computing task type of the first base station and the computing resource type and supported computing task type of the first node; or the computing type-related information is configured to indicate the computing resource type and supported computing task type of the first base station; or the computing type-related information is configured to indicate the computing resource type and supported computing task type of the first node, etc. In practical applications, the computing resource type may be denoted as Resource type and may include CPU/GPU/FPGA, etc. The computing task type may be denoted as Task type and may include AI/CU/DU, FFT/IFFT/DFT/LDPC/POLAR/PDCP encryption/decryption operations, user access-related processing, etc.

The location-related information may also be determined according to actual conditions and is not limited herein. As an example, the location-related information may be understood as information describing the geographic location of a computing node. In practical applications, the location-related information may be denoted as Location. That the location-related information is configured to indicate the geographic location of the first base station and/or the first node and/or the second base station may be understood as: the location-related information is configured to indicate the geographic location of the first base station; or the location-related information is configured to indicate the geographic location of the first node; or the location-related information is configured to indicate the geographic location of the second base station; or the location-related information is configured to indicate the geographic location of the first base station and the geographic location of the first node; or the location-related information is configured to indicate the geographic location of the first base station and the geographic location of the second base station; or the location-related information is configured to indicate the geographic location of the first node and the geographic location of the second base station; the location-related information is configured to indicate the geographic location of the first base station, the geographic location of the first node and the geographic location of the second base station, etc.

The computing resource-related information may also be determined according to actual conditions and is not limited herein. As an example, the computing resource-related information may be understood as capacity information describing a computing resource type and may include information related to total capacity and/or available capacity of the computing resource type. That the computing resource-related information is configured to indicate the total capacity and/or available capacity of the computing resource type of the first base station and/or the first node and/or the second base station may be understood as: the computing resource-related information is configured to indicate the total capacity and/or available capacity of the computing resource type of the first base station; or the computing resource-related information is configured to indicate the total capacity and/or available capacity of the first node; or the computing resource-related information is configured to indicate the total capacity and/or available capacity of the computing resource type of the second base station; or the computing resource-related information is configured to indicate the total capacity and/or available capacity of the computing resource type of the first base station and the total capacity and/or available capacity of the computing resource type of the first node; or the computing resource-related information is configured to indicate the total capacity and/or available capacity of the computing resource type of the first base station and the total capacity and/or available capacity of the computing resource type of the second base station; or the computing resource-related information is configured to indicate the total capacity and/or available capacity of the computing resource type of the first base station, the total capacity and/or available capacity of the computing resource type of the first node and the total capacity and/or available capacity of the computing resource type of the second base station, etc.

In an embodiment, the method further includes:
determining a correspondence between the first identifier and the second identifier based on the first parameter;
determining a node with a highest priority from the at least one second node according to the correspondence and/or the computing resource-related information;
updating an identifier of the node with the highest priority from the at least one second node in a computing table in the first parameter.

In this embodiment, the manner of determining the correspondence between the first identifier and the second identifier based on the first parameter may be determined according to actual conditions and is not limited herein. As an example, the correspondence may be understood as an association relationship.

Determining a node with the highest priority from the at least one second node according to the correspondence and/or the computing resource-related information may be understood as: determining a node with a highest priority from the at least one second node according to the correspondence; or determining a node with the highest priority from the at least one second node according to the computing resource-related information; or determining a node with the highest priority from the at least one second node according to the correspondence and the computing resource-related information.

The computing table in the first parameter may be understood as a computing table formed by various parameters; the specific content of the computing table may be determined according to actual conditions and is not limited herein. As an example, the computing table may include Computing ID, Cluster ID, Node ID, gNB ID, Computing type, Resource type, Task type, etc. In practical applications, the computing table may include a computing capability table and a computing relation table.

For ease of understanding, an example is given here: a reference priority may be defined by the current base station according to a nearby computing table. The base station selects base station(s) in the computing table that belong to neighbor cells of the current cell according to the correspondence between the unique base station identifiers in the neighbor relation table and the unique base station identifiers gNB ID in the newly defined computing table, and updates the computing table by setting the highest priority to computing node(s) belonging to neighbor base stations of the current cell in the computing table. The current base station preferentially selects neighbor base stations in scenarios such as insufficient computing resources, introduction of new functions/services, or user mobility.

In an embodiment, the first identifier includes at least one of the following:
a cluster identifier associated with the first information related to the first computing and the second information related to the second computing;
an intra-cluster node identifier associated with the first information related to the first computing and the second information related to the second computing.

The cluster identifier associated with the first information related to the first computing and the second information related to the second computing may be denoted as Cluster ID in practical applications.

The intra-cluster node identifier associated with the first information related to the first computing and the second information related to the second computing may be denoted as Node ID in practical applications.

In an embodiment, the method further includes:
sending update information of the first parameter to the first network element; the update information is configured for the second network element to update a computing table in the first parameter to obtain an updated computing table.

In this embodiment, the computing table in the first parameter may be understood as a computing table formed by various parameters; the specific content of the computing table may be determined according to actual conditions and is not limited herein. As an example, the computing table may include Computing ID, Cluster ID, Node ID, gNB ID, Computing type, Resource type, Task type, etc.

For ease of understanding, an example is given here where the first network element is Near-RT RIC, the second network element is Non-RT RIC, and the computing processing method is an inter-base-station computing processing method, specifically an inter-base-station computing perception method. Near-RT RIC can receive the computing table configured by the Non-Realtime RAN Intelligent Controller and update the computing table according to changes in computing of the base station(s) or computing node(s). Based on the initialized nearby computing table, Near-RT RIC obtains the base station identifiers and computing identifiers of target gNB(s) and computing node(s), and requests/subscribes to computing capability(ies) from corresponding base station(s) via an enhanced E2 interface or from computing node(s) via a newly added interface. After receiving the computing capability request from the Near-RT RIC, the target base station gNB and the computing node monitor updates of the computing capability(ies) of the local base station/node. When it is detected that computing resource type or computing capability is expanded in the gNB or computing node, the computing capabilities including computing type, location information, etc. are reported periodically or event-triggered via the enhanced E2 interface or the newly added interface. Upon receiving the updated computing capabilities reported by the gNB and the computing node, the Near-RT RIC updates the computing table accordingly.

In an embodiment, the computing type-related information includes at least one of the following:
computing resource type identifiers; the computing resource type identifiers include at least identifiers corresponding to CPU, GPU, and FPGA;
computing task type identifiers; the computing task type identifiers include at least identifiers corresponding to AI, CU, DU, FFT, IFFT, DFT, LDPC, POLAR, and PDCP.

In this embodiment, both the computing resource type identifier and the computing task type identifier may be determined according to actual conditions and are not limited herein. The computing resource type identifier may be denoted as Resource type and may include identifiers corresponding to CPU, GPU, FPGA, etc. The computing task type identifier may be denoted as Task type and may include identifiers corresponding to AI, CU, DU, FFT, IFFT, DFT, LDPC, POLAR, PDCP encryption/decryption operations, user access-related processing, etc.

In an embodiment, the second network element includes one of the following:
network management system;
SMO;
Non-RT RIC;
NFO;
FOCOM.

In this embodiment, a computing capability indicator relation table is introduced and maintained internally to indicate the computing capabilities of other nodes neighboring and/or in proximity of the current cell, thereby solving the problem in existing solutions that cells can only perceive coverage-based neighbor cell conditions and cannot perceive information such as nearby computing resources. When the current cell has insufficient resources or needs additional computing resources for introducing new functions or services, appropriate shared computing can be selected according to service requirement(s); or during handover between gNBs, the source cell can select a target cell and/or computing node based on neighbor cell coverage capability and computing capability, so as to meet service computing, delay and other requirements and ensure user service experience.

In the computing processing method provided by the embodiment of the present disclosure, a first network element selects one of at least two second network elements that can serve a first user group as an active network element of the first user group, and uses other second network element(s) of the at least two second network elements except the selected second network element as standby network element(s). With the solution provided by the embodiment of the present disclosure, active and standby second network elements are provided for the same user group, and the first network element determines the active/standby status of the second network elements, so that a second network element can be selected for users of the user group according to the determined active/standby status of the second network elements. This implements fault disaster recovery, improves network reliability and flexibility, and enhances user experience.

The present disclosure is described in further detail below with reference to application embodiments.

The present disclosure introduces and maintains computing capability indicator(s) within a certain range inside a cell to indicate the computing capabilities of other nodes neighboring and/or in proximity of the current cell. By collecting computing resource occupancy, surplus computing resources and other information, the source cell can select a target cell and/or computing node based on neighbor cell coverage capability and computing capability during handover between gNBs, or select appropriate shared computing according to service requirement(s) when the current cell has insufficient resources or needs additional computing resources for introducing new functions or services, thereby meeting service computing, delay and other requirements and ensuring user service experience.

The present disclosure proposes an inter-base-station computing perception method, which mainly defines and maintains a neighbor computing node relation table for a base station, as shown in Table 1, so that the base station can perceive shareable computing resource conditions of other neighbor nodes, facilitating the current base station to efficiently select neighbor computing nodes according to service requirement(s) in scenarios such as insufficient computing resources, introduction of new functions/services, or handover, so as to meet service computing, delay and other requirements.

**Table 1 Neighbor Computing Node Table**

| Parameter | Description |
|---|---|
| Computing ID | Used to uniquely identify computing, including cluster ID and node ID |
| > Cluster ID | ID of the cluster where it is located |
| > Node ID | ID of a node within the cluster, i.e., server ID |
| gNB ID | Used to uniquely identify a base station, including PLMN ID, etc. |
| Computing type | Used to describe the computing type, including resource type and task type |
| >Resource type | Resource type identifier, including CPU/GPU/FPGA, etc. |
| > Task type | Computing task type identifier, including AI, CU/DU, FFT/IFFT/DFT, LDPC/POLAR, PDCP encryption and decryption operations, user access-related processing, etc. |
| Location | Geographic location of the computing node |
| Priority | Used to describe the selection priority of computing nodes; a smaller number indicates a higher priority. For example, SMO may determine the priority according to the geographic locations of neighbor nodes of the current base station, the connection relationships between base stations in the backhaul link, or the relative delay between base stations, etc. |

Specifically, the computing processing method may be understood as an inter-base-station computing perception method, and a corresponding implementation is that SMO updates and maintains computing capabilities near a cell according to Embodiment One.

Embodiment One: A management and orchestration module maintains computing capabilities near a base station.

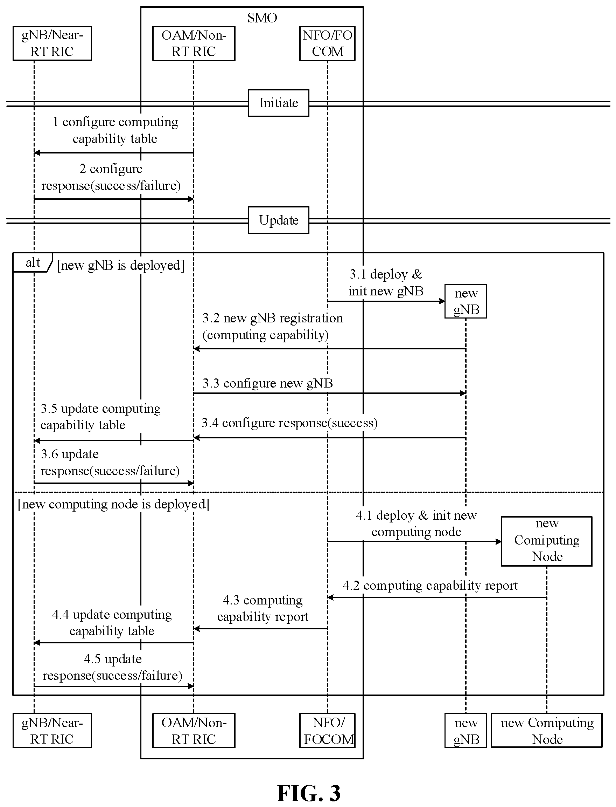

In the initialization phase, OAM/Non-RT RIC in the management and orchestration module configures a computing table near a base station, updates the computing table according to deployment of new base station(s) or computing node(s), and sends the updated computing table to the base station or Near-RT RIC, as shown in FIG. 3, which is a schematic diagram of an application of the computing processing method of the present disclosure. The specific steps are as follows.

In Step 1, in the network planning phase, initialization is performed, and OAM configures a computing table near a current base station, or Non-RT RIC/rApp configures the computing table near the current base station to a Near-RT RIC via the A1 interface, e.g., determining a cell computing table range and a computing node selection priority according to geographic location(s) of node(s), connection relationship between base stations in the backhaul link, or the relative delay between base stations.

In Step 2, the base station/Near-RT RIC feeds back to the OAM/Non-RT RIC whether configuration of the computing table succeeds or fails.

In Step 3, When FOCOM updates cloud infrastructure configuration and NFO deploys and initializes a new base station, the newly deployed base station registers with OAM and reports its computing capabilities, including computing a power-related identifier, a computing type, location and other information. After OAM successfully configures the new base station, OAM updates the newly deployed and running base station to the current base station computing table. Similarly, when OAM acquires that an neighbor base station is shut down, OAM deletes relevant information related to the shut-down base station from the table.

In Step 4, when FOCOM updates cloud infrastructure configuration and deploys a new computing node or expands a new computing board on an existing gNB, the new computing node reports its computing capabilities to OAM via FOCOM, and OAM/Non-RT RIC updates the information related to the newly deployed computing node to the current base station computing table. Similarly, when FOCOM acquires that a node is shut down, FOCOM sends an update to OAM, and OAM deletes relevant information related to the shut-down base station from the table.

Specifically, the computing processing method may be understood as an inter-base-station computing perception method, and a corresponding implementation is that Near-RT RIC updates and maintains computing capabilities near a cell according to Embodiment Two.

Embodiment Two: Near-RT RIC maintains near-base station computing capability(ies).

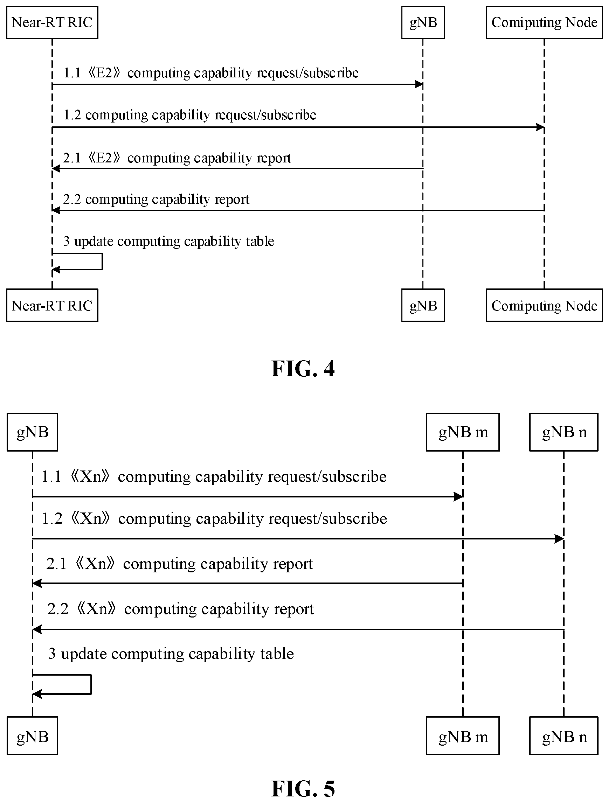

Near-RT RIC receives the computing table configured by Non-RT RIC (based on Steps 1 to 2 of Embodiment One) and updates the computing table according to changes in computing of base stations or computing nodes, as shown in FIG. 4, which is another schematic diagram of an application of the computing processing method of the present disclosure. The specific steps are as follows.

In Step 1, based on the initialized nearby computing table, Near-RT RIC obtains the base station identifiers and computing identifiers of target gNBs and computing nodes, and requests/subscribes to computing capability(ies) from corresponding base station(s) via an enhanced E2 interface or from computing node(s) via a newly added interface.

In Step 2, after receiving the computing capability request from Near-RT RIC, the target gNB and computing node monitor updates to their own computing capabilities. When it is detected that computing resource types or computing capabilities in the gNB or computing node is expanded, the computing capabilities including computing type, location information and the like are reported periodically or event-triggered via the enhanced E2 or newly added interface.

In Step 3, after receiving the updated computing capabilities reported by the gNB and computing node, Near-RT RIC updates the computing table accordingly.

Specifically, the computing processing method may be understood as an inter-base-station computing perception method, and a corresponding implementation is that a gNB updates near-base station computing capability(ies) according to Embodiment Three.

Embodiment Three: A gNB updates computing capabilities near base stations.

Based on the existing near-base station computing table, the gNB requests/subscribes to computing capability(ies) from neighbor base station(s) in the table via the Xn interface and updates the computing table according to feedback from the neighbor base station(s). As shown in FIG. 5, which is another schematic diagram of an application of the computing processing method of the present disclosure, the specific steps are as follows.

In Step 1, based on the initialized nearby computing table, the gNB obtains the base station identifiers and computing identifiers of target gNB m and gNB n, and requests/subscribes to computing capability(ies) from the corresponding base station(s) via the Xn interface.

In Step 2, after receiving the computing capability request from the source base station, the target gNB m and gNB n monitor updates to their own computing capabilities. When it is detected that computing resource types or computing capabilities in gNB m or gNB n is expanded, the computing capabilities including computing type, location information and the like are reported periodically or event-triggered via the Xn interface.

In Step 3, after receiving the updated computing capabilities reported by gNB m and gNB n, the gNB updates the computing table accordingly.

Specifically, the computing processing method may be understood as an inter-base-station computing perception method, and a corresponding implementation is that the current base station defines a reference priority according to the nearby computing table according to Embodiment Four.

Embodiment Four: Base station defines reference priority.

The base station selects base stations in the computing table that belong to neighbor cells of the current cell according to the correspondence between the unique base station identifiers in the neighbor-cell relation table and the unique base station identifiers gNB ID in the newly defined computing table, and updates the computing table by setting the highest priority to computing node(s) belonging to neighbor base stations of the current cell in the computing table. The current base station preferentially selects neighbor base station(s) in scenarios such as insufficient computing resources, introduction of new functions/services, or user mobility.

Specifically, the computing processing method may be understood as an inter-base-station computing perception method, and based on the cell adjacent computing node relation table, an implementation is that the source base station collects computing resources according to Embodiment 5.

Embodiment Five: Source base station performs computing resource data collection.

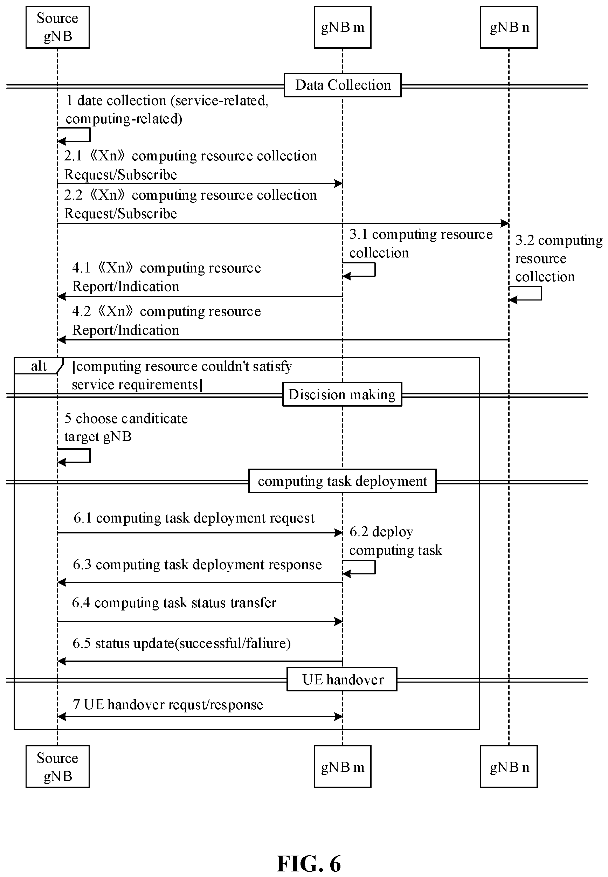

Based on the existing near-base station computing table in the gNB, the source base station requests/subscribes to the computing resource usage status from target base station, selects candidate base stations according to the service and computing resource status of the current base station, and migrates user(s) and/or computing task(s) to the candidate base stations. As shown in FIG. 6, which is another schematic diagram of an application of the computing processing method of the present disclosure, the specific steps are as follows.

In Step 1, the source base station collects the service status and computing resource occupancy of the current computing task, and judges whether the current base station can meet user/service computing requirement(s).

In Step 2, based on the initialized nearby computing table, the source base station gNB obtains the base station identifiers and computing identifiers of target gNB m and gNB n, and requests/subscribes to computing resource occupancy from the corresponding base stations via the Xn interface.

In Step 3, the target gNB m and gNB n collect computing resource occupancy.

In Step 4, the target gNB m and gNB n report the collected data related to computing resource occupancy to the source base station via the Xn interface. The supplementary computing resource occupancy data collectible via the Xn interface includes: total computing resource, used computing resource, available computing resource, task numbers, task completion ratio, etc.

In Step 5, based on the neighbor cell computing resource occupancy collected via the Xn interface, combined with the service requirements, service KPIs and computing resource occupancy of the local base station, a neighbor base station or computing node that meets the requirements is selected, when the computing resources of the local base station cannot meet user/service requirement(s).

In Step 6, the source base station redeploys the service and migrates service-related data to the neighbor-cell base station or computing node.

In Step 7, the source base station sends a user migration request to the target base station via the Xn interface and receives a user handover response.

Specifically, the computing processing method may be understood as an inter-base-station computing perception method, and based on the near-cell computing node relation table, an implementation is that Near-RT RIC collects computing resources according to Embodiment Six.

Embodiment Six: Near-RT RIC performs computing resource data collection.

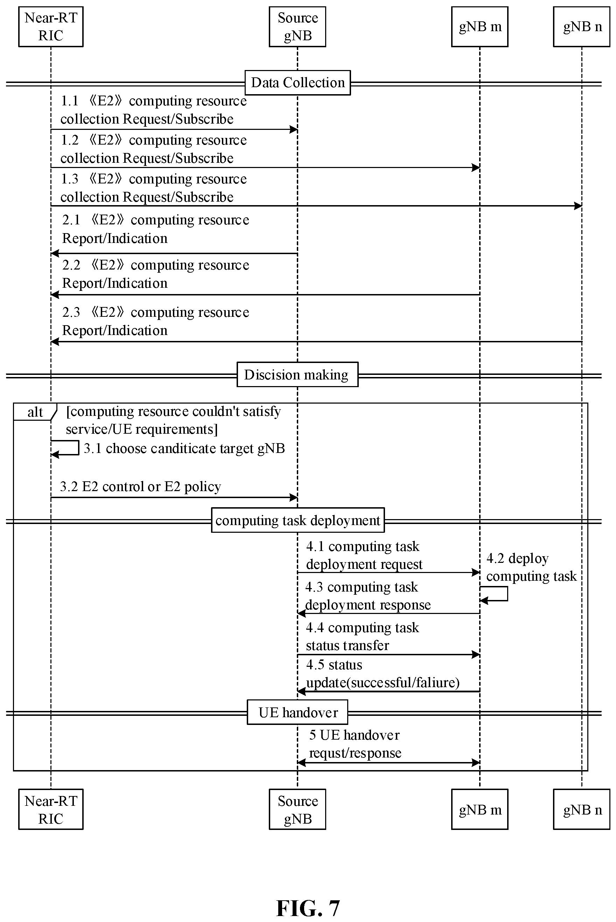

Based on the near-base-station computing table near the base station received by Near-RT RIC from Non-RT RIC (based on Steps 1 to 2 of Embodiment One), Near-RT RIC requests/subscribes to the computing resource usage status from a target base station, selects candidate base stations according to the service and computing resource status of the current base station, and migrates computing task(s)/user(s) to the candidate base station(s) by sending a control request to the source base station. As shown in FIG. 7, which is another schematic diagram of an application of the computing processing method of the present disclosure. The specific steps are as follows:
In Step 1, based on the initialized nearby computing table, Near-RT RIC requests/subscribes to computing resource occupancy from corresponding base station(s) via the E2 interface and judges whether the current base station can meet service computing requirement(s).
In Step 2, the source base station gNB and target gNB m, gNB n report the collected data related to computing resource occupancy to Near-RT RIC via the E2 interface. The supplementary computing resource occupancy data collectible via the E2 interface includes: total computing resource, used computing resource, available computing resource, task numbers, task completion ratio, and etc.
In Step 3, based on the neighbor cell computing resource occupancy collected via the E2 interface, combined with the service requirements, service KPIs and computing resource occupancy of the source base station, a neighbor base station that meets the requirement(s) is selected, and a task deployment/user handover request is sent to the source base station via E2 control or policy, when the computing resources of the source base station cannot meet service/user requirement(s).
In Step 4, the source base station redeploys the service and migrates service-related data to the neighbor base station or computing node.
In Step 5, the source base station sends a user migration request to the target base station via the Xn interface and receives a user handover response.

The present disclosure proposes an inter-base-station computing perception method, which mainly introduces and maintains a computing capability indicator relation table inside a cell to indicate the computing capabilities of other nodes neighboring and/or in proximity of the current cell, thereby solving the problem in existing solutions that a cell can only perceive coverage-based neighbor cell conditions and cannot perceive information such as nearby computing resources. When the current cell has insufficient resources or needs additional computing resources for introducing new functions or services, appropriate shared computing can be selected according to service requirement(s); or during handover between gNBs, the source cell can select a target cell and/or computing node based on neighbor cell coverage capability and computing capability, so as to meet service computing, delay and other requirements and ensure user service experience.

The solution provided by this application embodiment is a disaster recovery solution applicable to user groups. Adoption of the solution of this application embodiment improves network reliability and user experience.

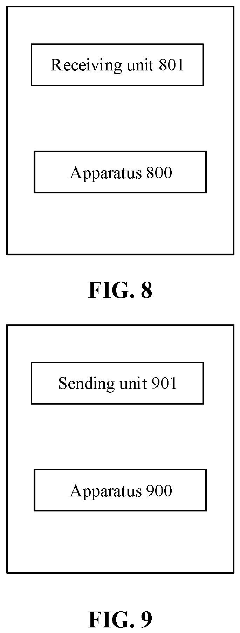

To implement the method of the embodiment of the present disclosure, the embodiment of the present disclosure further provides a computing processing apparatus disposed on a first network element, as shown in FIG. 8, which is a schematic diagram of a computing processing apparatus according to an embodiment of the present disclosure. The apparatus 800 includes a receiving unit 801.

The receiving unit 801 is configured to receive a first parameter sent by a second network element. The first parameter characterizes first information related to first computing of a first base station and/or second information related to second computing of at least one first node and/or second base station neighboring and/or in proximity of the first base station.

In an embodiment, the first parameter includes at least one of the following:
a first identifier, configured to identify the first information related to the first computing and/or the second information related to the second computing;
a second identifier, configured to identify at least one of the first base station, the first node, or the second base station;
computing type-related information, configured to indicate a computing resource type and/or a supported computing task type of at least one of the first base station, the first node, or the second base station;
location-related information, configured to indicate a geographic location of at least one of the first base station, the first node, or the second base station; or
computing resource-related information, configured to indicate a total capacity and/or available capacity of a computing resource type of at least one of the first base station, the first node, or the second base station.

In an embodiment, the apparatus 800 further includes a determining unit 802, configured to determine a target node and/or target base station based on the first parameter; the target node and/or target base station is configured to receive service migration and/or user handover from the first base station.

In an embodiment, the determining unit 802 is further configured to obtain a computing requirement of a target service and/or user; and in a case where the first computing cannot meet the computing requirement, determine a target node and/or target base station from the at least one first node and/or second base station according to the computing requirement and the second information related to the second computing. The target node and/or target base station is configured to receive service migration and/or user handover from the first base station.

In an embodiment, before determining the target node and/or target base station, the apparatus 800 further includes a sending unit 803, configured to send third information to the at least one first node and/or second base station, where the third information is configured to indicate the service status and/or computing resource occupancy of the first node and/or second base station.

In an embodiment, the first parameter includes a parameter requested to be updated from the second base station; the sending unit 803 is further configured to send request information for updating computing a power-related parameter to the second base station according to the first parameter, so as to obtain a feedback result from the second base station; update the first parameter based on the feedback result, to obtain an updated first parameter. The updated first parameter is configured to update a computing table in the first parameter.

In an embodiment, the first identifier includes at least one of the following:
a cluster identifier associated with the first information related to the first computing and the second information related to the second computing; or
an intra-cluster node identifier associated with the first information related to the first computing and the second information related to the second computing.

In an embodiment, the receiving unit 801 is further configured to receive update information of the first parameter sent by the second network element; and update the computing table in the first parameter based on the update information, so as to obtain an updated computing table.

In an embodiment, the computing type-related information includes at least one of the following:
computing resource type identifiers, including at least identifiers corresponding to Central Processing Unit (CPU), Graphics Processing Unit (GPU), and Field-Programmable Gate Array (FPGA); or
computing task type identifiers, including at least identifiers corresponding to Artificial Intelligence (AI), Centralized Unit (CU), Distributed Unit (DU), Fast Fourier Transformation (FFT), Inverse Fast Fourier Transform (IFFT), Delayed-First-Transmission (DFT), Low Density Parity Check Code (LDPC), Polar Codes (POLAR), and Packet Data Convergence Protocol (PDCP). .

In an embodiment, the first network element includes one of the following:
a base station; or
a Near-Realtime RAN Intelligent Controller (Near-RT RIC).

In practical applications, the determining unit 802 may be implemented by a processor of the computing processing apparatus in combination with a communication interface.

To implement the method on the second network element side of the embodiment of the present disclosure, the embodiment of the present disclosure further provides a computing processing apparatus disposed on a second network element, as shown in FIG. 9, which is another schematic diagram of a computing processing apparatus according to an embodiment of the present disclosure. The apparatus 900 includes a sending unit 901.

The sending unit 901 is configured to send a first parameter to a first network element. The first parameter characterizes first information related to first computing of a first base station and/or second information related to second computing of at least one first node and/or second base station neighboring and/or in proximity of the first base station.

In an embodiment, the first parameter includes at least one of the following:
a first identifier, configured to identify the first information related to the first computing and/or the second information related to the second computing;
a second identifier, configured to identify at least one of the first base station, the first node, or the second base station;
computing type-related information, configured to indicate a computing resource type and/or a supported computing task type of at least one of the first base station, the first node, or the second base station;
location-related information, configured to indicate a geographic location of at least one of the first base station, the first node, or the second base station; or
computing resource-related information, configured to indicate a total capacity and/or available capacity of a computing resource type of at least one of the first base station, the first node, or the second base station.

In an embodiment, the apparatus 900 further includes a determining unit 902 and an updating unit 903.

The determining unit 902 is configured to determine a correspondence between the first identifier and the second identifier based on the first parameter; and determine a node with a highest priority from the at least one second node according to the correspondence and/or the computing resource-related information.

The updating unit 903 is configured to update an identifier of the node with the highest priority from the at least one second node in a computing table in the first parameter.

In an embodiment, the first identifier includes at least one of the following:
a cluster identifier associated with the first information related to the first computing and the second information related to the second computing; or
an intra-cluster node identifier associated with the first information related to the first computing and the second information related to the second computing.

In an embodiment, the sending unit 901 is further configured to send update information of the first parameter to the first network element; the update information is configured for the second network element to update the computing table in the first parameter, so as to obtain an updated computing table.

In an embodiment, the computing type-related information includes at least one of the following:
computing resource type identifiers, comprising at least identifiers corresponding to Central Processing Unit (CPU), Graphics Processing Unit (GPU), and Field-Programmable Gate Array (FPGA); or
computing task type identifiers, comprising at least identifiers corresponding to Artificial Intelligence (AI), Centralized Unit (CU), Distributed Unit (DU), Fast Fourier Transformation (FFT), Inverse Fast Fourier Transform (IFFT), Delayed-First-Transmission (DFT), Low Density Parity Check Code (LDPC), Polar Codes (POLAR), and Packet Data Convergence Protocol (PDCP).

In an embodiment, the second network element includes one of the following:
a network management system;
a Service Management & Orchestration (SMO);
a Non-Realtime RAN Intelligent Controller (Non-RT RIC);
a Network Function Orchestration (NFO); or
a Federated O-Cloud Orchestration & Management (FOCOM).

In practical applications, the sending unit 901 may be implemented by a communication interface of the computing processing apparatus, and the determining unit 902 and the updating unit 903 may be implemented by a processor of the computing processing apparatus in combination with a communication interface.

It should be noted that: when performing computing processing, the computing processing apparatus provided in the above embodiment is only illustrated by the division of the above program modules. In practical applications, the above processing may be allocated to and completed by different program modules as required, that is, the internal structure of the apparatus is divided into different program modules to complete all or part of the above-described processing. In addition, the computing processing apparatus provided in the above embodiment and the computing processing method embodiment belong to the same concept, and the specific implementation process is detailed in the method embodiment, which is not repeated here.

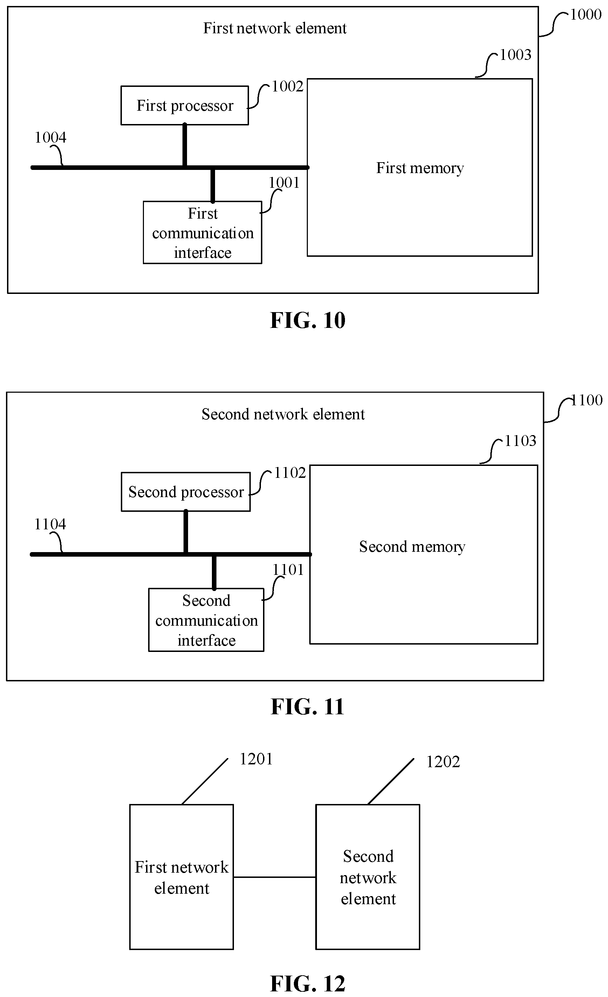

Based on the hardware implementation of the above program modules, and to implement the method on the first network element side in the embodiments of the present disclosure, an embodiment of the present disclosure further provides a first network element, as shown in FIG. 10, which is a schematic structural diagram of a first network element according to an embodiment of the present disclosure. The first network element 1000 includes: a first communication interface 1001, a first processor 1002, and a first memory 1003.

The first communication interface 1001 is capable of performing information interaction with other network elements (such as a second network element, etc.).

The first processor 1002 is connected to the first communication interface 1001 to implement information interaction with other network elements, and configured to execute the method provided by one or more technical solutions on the first network element side when running a computer program.

The first memory 1003 has a computer program stored therein.

Specifically, the first communication interface 1001 is configured to receive a first parameter sent by a second network element. The first parameter characterizes first information related to first computing of a first base station and/or second information related to second computing of at least one first node and/or second base station neighboring and/or in proximity of the first base station.

In an embodiment, the first parameter includes at least one of the following:
computing and/or the second information related to the second computing;
a second identifier, configured to identify at least one of the first base station, the first node, or the second base station;
computing type-related information, configured to indicate a computing resource type and/or a supported computing task type of at least one of the first base station, the first node, or the second base station;
location-related information, configured to indicate a geographic location of at least one of the first base station, the first node, or the second base station; or
computing resource-related information, configured to indicate a total capacity and/or available capacity of a computing resource type of at least one of the first base station, the first node, or the second base station.

In an embodiment, the first processor 1002 is configured to determine a target node and/or a target base station based on the first parameter; the target node and/or the target base station is configured to receive service migration and/or user handover from the first base station.

In an embodiment, the first processor 1002 is further configured to obtain a computing requirement of a target service and/or a user; and determine, from the at least one first node and/or second base station, the target node and/or the target base station according to the computing requirement and the second information related to the second computing, in a case where the first computing cannot meet the computing requirements; the target node and/or the target base station is configured to receive service migration and/or user handover from the first base station.

In an embodiment, before determining the target node and/or the target base station, the first communication interface 1001 is further configured to send third information to the at least one first node and/or second base station, where the third information is configured to indicate a service status and/or computing resource occupancy of the first node and/or the second base station.

In an embodiment, the first parameter includes a parameter requested to be updated from the second base station; the first processor 1002 is further configured to: send request information for updating a computing-related parameter to the second base station according to the first parameter, so as to obtain a feedback result from the second base station; update the first parameter based on the feedback result, so as to obtain an updated first parameter; the updated first parameter is configured to update a computing table in the first parameter.

In an embodiment, the first identifier includes at least one of the following:
a cluster identifier associated with the first information related to the first computing and the second information related to the second computing; or
an intra-cluster node identifier associated with the first information related to the first computing and the second information related to the second computing.

In an embodiment, the first communication interface 1001 is further configured to receive update information of the first parameter sent by the second network element; and
the first processor 1002 is further configured to update a computing table in the first parameter based on the update information, so as to obtain an updated computing table.

In an embodiment, the computing type-related information includes at least one of the following:
computing resource type identifiers, including at least identifiers corresponding to a Central Processing Unit (CPU), a Graphics Processing Unit (GPU), and a Field-Programmable Gate Array (FPGA);
computing task type identifiers, including at least identifiers corresponding to Artificial Intelligence (AI), Centralized Unit (CU), Distributed Unit (DU), Fast Fourier Transformation (FFT), Inverse Fast Fourier Transform (IFFT), Delayed-First-Transmission (DFT), Low Density Parity Check Code (LDPC), Polar Codes (POLAR), and Packet Data Convergence Protocol (PDCP).

In an embodiment, the first network element includes one of the following:
a base station; or
a Near-Realtime RAN Intelligent Controller (Near-RT RIC).

It should be noted that the specific processing procedure of the first processor 1002 may be understood with reference to the above method.

Certainly, in practical applications, various components in the first network element 1000 are coupled together through a bus system 1004. It may be understood that the bus system 1004 is configured to implement connection and communication between these components. In addition to a data bus, the bus system 1004 further includes a power bus, a control bus, and a status signal bus. However, for clarity of illustration, various buses are marked as the bus system 1004 in FIG. 10.

The first memory 1003 in the embodiment of the present disclosure is configured to store various types of data to support operations of the first network element 1000. Examples of such data include any computer program for operation on the first network element 1000.

The method disclosed in the above embodiment of the present disclosure may be applied to the first processor 1002 or implemented by the first processor 1002. The first processor 1002 may be an integrated circuit chip with signal processing capability. During implementation, steps of the above method may be completed by an integrated logic circuit of hardware in the first processor 1002 or instructions in a form of software. The first processor 1002 may be a general-purpose processor, a Digital Signal Processor (DSP), or other programmable logic devices, discrete gate or transistor logic devices, discrete hardware components, and the like. The first processor 1002 may implement or execute various methods, steps, and logical block diagrams disclosed in the embodiments of the present disclosure. The general-purpose processor may be a microprocessor or any conventional processor. Steps of the method disclosed in combination with the embodiments of the present disclosure may be directly embodied as being completed by execution of a hardware decoding processor, or completed by a combination of hardware and software modules in the decoding processor. The software module may be located in a storage medium, the storage medium is located in the first memory 1003, and the first processor 1002 reads information in the first memory 1003 and completes steps of the foregoing method in combination with hardware thereof.

In an exemplary embodiment, the first network element 1000 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components, configured to execute the foregoing method.

Based on the hardware implementation of the above program modules, and to implement the method on the second network element side in the embodiments of the present disclosure, an embodiment of the present disclosure further provides a second network element, as shown in FIG. 11, which is a schematic structural diagram of a second network element according to an embodiment of the present disclosure. The second network element 1100 includes: a second communication interface 1101, a second processor 1102, and a second memory 1103.

The second communication interface 1101 is capable of performing information interaction with other network elements (such as a first network element, etc.);
The second processor 1102 is connected to the second communication interface 1101 to implement information interaction with other network elements, and configured to execute the method provided by one or more technical solutions on the second network element side when running a computer program;
The second memory 1103 has a computer program stored therein.

Specifically, the second communication interface 1101 is configured to send a first parameter to a first network element. The first parameter characterizes first information related to first computing of a first base station and/or second information related to second computing of at least one first node and/or second base station neighboring and/or in proximity of the first base station.

In an embodiment, the first parameter includes at least one of the following:
a first identifier, configured to identify the first information related to the first computing and/or the second information related to the second computing;
a second identifier, configured to identify at least one of the first base station, the first node, or the second base station;
computing type-related information, configured to indicate a computing resource type and/or a supported computing task type of at least one of the first base station, the first node, or the second base station;
location-related information, configured to indicate a geographic location of at least one of the first base station, the first node, or the second base station; or
computing resource-related information, configured to indicate a total capacity and/or available capacity of a computing resource type of at least one of the first base station, the first node, or the second base station.

In an embodiment, the second processor 1102 is configured to determine a correspondence between the first identifier and the second identifier based on the first parameter; determine a node with a highest priority from the at least one second node according to the correspondence and/or the computing resource-related information; and update an identifier of the node with the highest priority from the at least one second node in a computing table in the first parameter.

In an embodiment, the first identifier includes at least one of the following:
a cluster identifier associated with the first information related to the first computing and the second information related to the second computing; or
an intra-cluster node identifier associated with the first information related to the first computing and the second information related to the second computing.

In an embodiment, the second communication interface 1101 is further configured to send update information of the first parameter to the first network element. The update information is configured for the second network element to update the computing table in the first parameter, so as to obtain an updated computing table.

In an embodiment, the computing type-related information includes at least one of the following:
computing resource type identifiers, including at least identifiers corresponding to a Central Processing Unit (CPU), a Graphics Processing Unit (GPU), and a Field-Programmable Gate Array (FPGA); or
computing task type identifiers, including at least identifiers corresponding to Artificial Intelligence (AI), Centralized Unit (CU), Distributed Unit (DU), Fast Fourier Transformation (FFT), Inverse Fast Fourier Transform (IFFT), Delayed-First-Transmission (DFT), Low Density Parity Check Code (LDPC), Polar Codes (POLAR), and Packet Data Convergence Protocol (PDCP).

In an embodiment, the second network element includes one of the following:
a network management system;
aService Management & Orchestration (SMO);
a Non-Realtime RAN Intelligent Controller (Non-RT RIC);
a Network Function Orchestration (NFO); or
a Federated O-Cloud Orchestration & Management (FOCOM).

It should be noted that specific processing procedures of the second processor 1102 and the second communication interface 1101 may be understood with reference to the above method.

Certainly, in practical applications, various components in the second network element 1100 are coupled together through a bus system 1104. It may be understood that the bus system 1104 is configured to implement connection and communication between these components. In addition to a data bus, the bus system 1104 further includes a power bus, a control bus, and a status signal bus. However, for clarity of illustration, various buses are marked as the bus system 1104 in FIG. 11.

The second memory 1103 in the embodiment of the present disclosure is configured to store various types of data to support operations of the second network element 1100. Examples of such data include any computer program for operation on the second network element 1100.

The method disclosed in the above embodiment of the present disclosure may be applied to the second processor 1102 or implemented by the second processor 1102. The second processor 1102 may be an integrated circuit chip with signal processing capability. During implementation, steps of the above method may be completed by an integrated logic circuit of hardware in the second processor 1102 or instructions in a form of software. The second processor 1102 may be a general-purpose processor, a DSP, or other programmable logic devices, discrete gate or transistor logic devices, discrete hardware components, and the like. The second processor 1102 may implement or execute various methods, steps, and logical block diagrams disclosed in the embodiments of the present disclosure. The general-purpose processor may be a microprocessor or any conventional processor. Steps of the method disclosed in combination with the embodiments of the present disclosure may be directly embodied as being completed by execution of a hardware decoding processor, or completed by a combination of hardware and software modules in the decoding processor. The software module may be located in a storage medium, the storage medium is located in the second memory 1103, and the second processor 1102 reads information in the second memory 1103 and completes steps of the foregoing method in combination with hardware thereof.

In an exemplary embodiment, the second network element 1100 may be implemented by one or more ASICs, DSPs, PLDs, CPLDs, FPGAs, general-purpose processors, controllers, MCUs, microprocessors, or other electronic components, configured to execute the foregoing method.

It may be understood that memories (the first memory 1003 and the second memory 1103) in the embodiments of the present disclosure may be volatile memories or non-volatile memories, and may also include both volatile and non-volatile memories. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a ferromagnetic random access memory (FRAM), a Flash Memory, a magnetic surface memory, an optical disk, or a Compact Disc Read-Only Memory (CD-ROM); the magnetic surface memory may be a disk memory or a tape memory. The volatile memory may be a Random Access Memory (RAM), which acts as an external cache. By way of example and not limitation, many forms of RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), SyncLink Dynamic Random Access Memory (SLDRAM), and Direct Rambus Random Access Memory (DRRAM). The memories described in the embodiments of the present disclosure are intended to include, but are not limited to, these and any other suitable types of memories.

To implement the method provided in the embodiments of the present disclosure, an embodiment of the present disclosure further provides a computing processing system, as shown in FIG. 12, which is a schematic diagram of a computing processing system according to an embodiment of the present disclosure. The system includes: a first network element 1201 and a second network element 1202.

Here, it should be noted that specific processing procedures of the first network element 1201 and the second network element 1202 have been described in detail above and will not be repeated here.

In an exemplary embodiment, an embodiment of the present disclosure further provides a storage medium, namely a computer storage medium, specifically a computer-readable storage medium, such as the first memory 1003 storing a computer program, where the computer program may be executed by the first processor 1002 of the first network element 1000 to complete steps described in the foregoing method on the first network element side, and for another example, the second memory 1103 storing a computer program, where the computer program may be executed by the second processor 1102 of the second network element 1100 to complete steps described in the foregoing method on the second network element side. The computer-readable storage medium may be a FRAM, ROM, PROM, EPROM, EEPROM, Flash Memory, magnetic surface memory, optical disk, or CD-ROM.

It should be noted that terms such as "first" and "second" are used to distinguish similar objects and not necessarily to describe a specific order or sequence.

In addition, the technical solutions recorded in the embodiments of the present disclosure may be combined arbitrarily provided that there is no conflict.

The above are only preferred embodiments of the present disclosure and are not intended to limit the protection scope of the present disclosure.

## Claims

1. A computing processing method, applied to a first network element, comprising:
receiving a first parameter sent by a second network element, wherein the first parameter characterizes first information related to first computing of a first base station and/or second information related to second computing of at least one first node and/or second base station neighboring and/or in proximity of the first base station.

2. The method according to claim 1, wherein the first parameter comprises at least one of the following:
a first identifier, configured to identify the first information related to the first computing and/or the second information related to the second computing;
a second identifier, configured to identify at least one of the first base station, the first node, or the second base station;
computing type-related information, configured to indicate a computing resource type and/or a supported computing task type of at least one of the first base station, the first node, or the second base station;
location-related information, configured to indicate a geographic location of at least one of the first base station, the first node, or the second base station; or
computing resource-related information, configured to indicate a total capacity and/or available capacity of a computing resource type of at least one of the first base station, the first node, or the second base station.

3. The method according to claim 1 or 2, further comprising:
determining a target node and/or a target base station based on the first parameter, wherein the target node and/or the target base station is configured to receive service migration and/or user handover from the first base station.

4. The method according to claim 3, wherein determining the target node and/or the target base station based on the first parameter comprises:
obtaining a computing requirement of a target service and/or a user; and
determining the target node and/or the target base station from the at least one first node and/or second base station according to the computing requirement and the second information related to the second computing, in a case where the first computing cannot meet the computing requirement, wherein the target node and/or the target base station is configured to receive service migration and/or user handover from the first base station.

5. The method according to claim 3 or 4, wherein before determining the target node and/or the target base station, the method further comprises:
sending third information to the at least one first node and/or second base station, wherein the third information is configured to indicate a service status and/or computing resource occupancy of the first node and/or the second base station.

6. The method according to any one of claims 1 to 5, wherein the first parameter comprises a parameter requested to be updated from the second base station; and the method further comprises:
sending request information for updating a computing-related parameter to the second base station according to the first parameter, to obtain a feedback result from the second base station; and
updating the first parameter based on the feedback result, to obtain an updated first parameter, wherein the updated first parameter is configured to update a computing table in the first parameter.

7. The method according to claim 2, wherein the first identifier comprises at least one of the following:
a cluster identifier associated with the first information related to the first computing and the second information related to the second computing; or
an intra-cluster node identifier associated with the first information related to the first computing and the second information related to the second computing.

8. The method according to any one of claims 1 to 7, further comprising:
receiving update information of the first parameter sent by the second network element; and
updating a computing table in the first parameter based on the update information, to obtain an updated computing table.

9. The method according to claim 2, wherein the computing type-related information comprises at least one of the following:
computing resource type identifiers, comprising at least identifiers corresponding to Central Processing Unit (CPU), Graphics Processing Unit (GPU), and Field-Programmable Gate Array (FPGA); or
computing task type identifiers, comprising at least identifiers corresponding to Artificial Intelligence (AI), Centralized Unit (CU), Distributed Unit (DU), Fast Fourier Transformation (FFT), Inverse Fast Fourier Transform (IFFT), Delayed-First-Transmission (DFT), Low Density Parity Check Code (LDPC), Polar Codes (POLAR), and Packet Data Convergence Protocol (PDCP).

10. The method according to any one of claims 1 to 9, wherein the first network element comprises one of the following:
a base station; or
Near-Realtime RAN Intelligent Controller (Near-RT RIC).

11. A computing processing method, applied to a second network element, comprising:
sending a first parameter to a first network element, wherein the first parameter characterizes first information related to first computing of a first base station and/or second information related to second computing of at least one first node and/or second base station neighboring and/or in proximity of the first base station.

12. The method according to claim 11, wherein the first parameter comprises at least one of the following:
a first identifier, configured to identify the first information related to the first computing and/or the second information related to the second computing;
a second identifier, configured to identify at least one of the first base station, the first node, or the second base station;
computing type-related information, configured to indicate a computing resource type and/or a supported computing task type of at least one of the first base station, the first node, or the second base station;
location-related information, configured to indicate a geographic location of at least one of the first base station, the first node, or the second base station; or
computing resource-related information, configured to indicate a total capacity and/or available capacity of a computing resource type of at least one of the first base station, the first node, or the second base station.

13. The method according to claim 12, further comprising:
determining a correspondence between the first identifier and the second identifier based on the first parameter;
determining a node with a highest priority from the at least one second node according to the correspondence and/or the computing resource-related information; and
updating an identifier of the node with the highest priority from the at least one second node in a computing table in the first parameter.

14. The method according to claim 12 or 13, wherein the first identifier comprises at least one of the following:
a cluster identifier associated with the first information related to the first computing and the second information related to the second computing; or
an intra-cluster node identifier associated with the first information related to the first computing and the second information related to the second computing.

15. The method according to any one of claims 11 to 14, further comprising:
sending update information of the first parameter to the first network element, wherein the update information is configured for the second network element to update the computing table in the first parameter, so as to obtain an updated computing table.

16. The method according to any one of claims 12 to 14, wherein the computing type-related information comprises at least one of the following:
computing resource type identifiers, comprising at least identifiers corresponding to Central Processing Unit (CPU), Graphics Processing Unit (GPU), and Field-Programmable Gate Array (FPGA); or
computing task type identifiers, comprising at least identifiers corresponding to Artificial Intelligence (AI), Centralized Unit (CU), Distributed Unit (DU), Fast Fourier Transformation (FFT), Inverse Fast Fourier Transform (IFFT), Delayed-First-Transmission (DFT), Low Density Parity Check Code (LDPC), Polar Codes (POLAR), and Packet Data Convergence Protocol (PDCP).

17. The method according to any one of claims 11 to 16, wherein the second network element comprises one of the following:
a network management system;
a Service Management & Orchestration (SMO);
a Non-Realtime RAN Intelligent Controller (Non-RT RIC);
a Network Function Orchestration (NFO); or
a Federated O-Cloud Orchestration & Management (FOCOM).

18. A computing processing apparatus, disposed in a first network element, comprising:
a receiving unit, configured to receive a first parameter sent by a second network element, wherein the first parameter characterizes first information related to first computing of a first base station and/or second information related to second computing of at least one first node and/or second base station neighboring and/or in proximity of the first base station.

19. A computing processing apparatus, disposed in a second network element, comprising:
a sending unit, configured to send a first parameter to a first network element, wherein the first parameter characterizes first information related to first computing of a first base station and/or second information related to second computing of at least one first node and/or second base station neighboring and/or in proximity of the first base station.

20. A first network element, comprising: a first communication interface and a first processor; wherein,
the first communication interface is configured to receive a first parameter sent by a second network element, wherein the first parameter characterizes first information related to first computing of a first base station and/or second information related to second computing of at least one first node and/or second base station neighboring and/or in proximity of the first base station.

21. A second network element, comprising: a second communication interface and a second processor; wherein,
the second communication interface is configured to send a first parameter to a first network element, wherein the first parameter characterizes first information related to first computing of a first base station and/or second information related to second computing of at least one first node and/or second base station neighboring and/or in proximity of the first base station.

22. A first network element, comprising: a first processor and a first memory configured to store a computer program operable on the processor,
wherein the first processor is configured to execute the steps of the method according to any one of claims 1 to 10 when running the computer program.

23. A second network element, comprising: a second processor and a second memory configured to store a computer program operable on the processor,
wherein the second processor is configured to execute the steps of the method according to any one of claims 11 to 17 when running the computer program.

24. A storage medium having a computer program stored thereon, wherein the computer program, when executed by a processor, implements the steps of the method according to any one of claims 1 to 10, or implements the steps of the method according to any one of claims 11 to 17.
